# EUROPÄISCHE PATENTSCHRIFT

(11) **EP 2 243 669 B1**
(45) Veröffentlichungstag und Bekanntmachung des Hinweises auf die Patenterteilung: **04.04.2012**
(21) Anmeldenummer: 10152128.4
(22) Anmeldetag: 29.01.2010
(51) Int. Cl.: B60R 21/38

(54) **Fronthaubenscharnier zur gelenkigen Anordnung einer Fronthaube an einem Fahrzeug**
Bonnet hinge for an articulated connection of a bonnet to a vehicle
Charnière de capot frontal destinée à l'agencement articulé d'un capot frontal sur un véhicule

(43) Veröffentlichungstag der Anmeldung: 27.10.2010
(73) Patentinhaber: ISE Automotive GmbH, 51702 Bergneustadt (DE)
(72) Erfinder: Olfert, Johann, 51702, Bergneustadt (DE)
(74) Vertreter: Kalkoff & Partner

(56) Entgegenhaltungen:
- EP-A1- 1 818 224
- EP-A1- 2 138 362
- WO-A1-2004/094204
- GB-A- 2 457 715
- US-A1- 2009 302 644

## Beschreibung

Die Erfindung betrifft ein Fronthaubenscharnier zur gelenkigen Anordnung einer Fronthaube an einem Fahrzeug, mit
- einem mit einem Karosseriebauteil verbindbaren unteren Scharnierflügel und
- einem mit der Fronthaube verbindbaren oberen Scharnierflügel, wobei
- der obere Scharnierflügel und der untere Scharnierflügel zur Verstellung der Fronthaube zwischen einer Schließposition und einer Öffnungsposition gelenkig miteinander verbunden sind, wobei der obere Scharnierflügel ein drehgelenkig mit dem unteren Scharnierflügel verbundenes Unterteil und ein an der Fronthaube anordbares Oberteil aufweist,
- wobei das Unterteil und das Oberteil gelenkig über mindestens einen Lenker verbunden sind und wobei eine Relativbewegung des Oberteils gegenüber dem Unterteil aus einer Normallage in eine Crashlage erst nach Trennung einer das Oberteil an dem Unterteil in der Normallage festlegenden Verbindung durch eine Trennvorrichtung erfolgt, wobei das Oberteil und das Unterteil in der Normallage über einen Scherstift aneinander festgelegt sind.

Fronthaubenscharniere der eingangs genannten Art sind bereits in vielfältigen Ausführungsformen aus dem Stand der Technik bekannt. Sie dienen zur schwenkbaren Aufnahme der Fronthaube, bspw. einer Motorhaube eines Kraftfahrzeuges und können zwischen einer Schließposition, in der die Haube, in der Regel gesichert durch ein Haubenschloss, einen Motorraum überdeckt und einer Öffnungsposition, welche den Zugang zu einem unter der Fronthaube angeordneten Motorraum ermöglicht, verstellt werden.

Zur Verringerung der Schwere von Verletzungen bei Unfällen, die sich mit Personen ereignen, werden zunehmend höhere Anforderungen an den Fußgängerschutz gestellt, wobei gewährleistet werden muss, dass vorgeschriebene HIC-Werte (Kopfaufprall auf der Fronthaube) erreicht werden. Sofern zwischen einem Motorblock und der darüber angeordneten Fronthaube nicht genügend Raum zur Energieabsorbierung beim Aufprall durch Deformation der Fronthaube zur Verfügung steht, werden vermehrt aktive Systeme eingesetzt, bei denen die Fronthaube sich im Falle eines Unfalls aufstellt, um zwischen dem Motorblock und der Fronthaube einen geeignet großen Verformungsraum bereitzustellen.

Bekannte Systeme, die eine Aufstellung der Fronthaube bewirken, weisen in der Regel einen sehr komplexen Aufbau auf, wobei insbesondere Mehrgelenkscharniere zum Einsatz kommen, welche eine Translations- und eine Schwenkbewegung der Fronthaube beim Übergang zwischen der Schließposition und der Öffnungsposition kombinieren. Damit auch derartige Fronthaubenscharniere im Ernstfall einen ergänzenden Verformungsraum bereitstellen, weisen diese äußerst komplexe Ausgestaltungen auf, die einen großen Bauraum zur Folge haben.

Ein gattungsgemäßes Fronthaubenscharnier, bei dem ein haubenseitiger und ein karosserieseitiger Flügel über einen gemeinsamen Lenker gelenkig miteinander verbunden sind, ist aus der EP 1818 224 A1 bekannt. Der obere Flügel ist dabei zusätzlich über bspw. einen Scherstift an dem Lenker festgelegt. Ein Trennen des Scherstifts bewirkt ein Aufstellen des oberen Flügels gegenüber dem unteren Flügel und dem Lenker.

Der Erfindung liegt die Aufgabe zugrunde, ein Fronthaubenscharnier der eingangs genannten Art bereitzustellen, das sich besonders kostengünstig herstellen lässt, eine hohe Funktionssicherheit aufweist sowie einen nur geringen Bauraum benötigt. Die Erfindung löst die Aufgabe durch ein Fronthaubenscharnier mit den Merkmalen des Anspruchs 1. Vorteilhafte Weiterbildungen der Erfindung sind in den abhängigen Ansprüchen angegeben.

Wesentlich für das erfindungsgemäße Fronthaubenscharnier ist, dass der obere Scharnierflügel ein drehgelenkig mit dem unteren Scharnierflügel verbundenes Unterteil sowie ein an der Fronthaube anordbares Oberteil aufweist. Das Unterteil und das Oberteil, welche die wesentlichen Elemente des oberen Scharnierflügels bilden, sind dabei über mindestens einen Lenker gelenkig miteinander verbunden, so dass eine Verstellung der Motorhaube gegenüber einem Fahrzeug ohne Verschwenkung des Unterteils gegenüber dem unteren Scharnierflügel, nämlich allein durch eine Relativbewegung des Oberteils gegenüber dem Unterteil erfolgen kann. Der Lenker definiert dabei die Relativbewegung des Oberteils zum Unterteil und somit die Verstellbewegung der Fronthaube gegenüber der übrigen Fahrzeugskarosserie.

Im Normalbetrieb des Fahrzeugs sind das Oberteil und das Unterteil derart miteinander verbunden, dass keine Relativbewegung des Oberteils gegenüber dem Unterteil erfolgen kann. Diese ist nur im Crashfall erforderlich und setzt voraus, dass die das Oberteil an dem Unterteil festlegende Verbindung zuvor durch eine Trennvorrichtung aufgehoben wird. Nach Aufhebung der Verbindung besteht dann die Möglichkeit, das Oberteil gegenüber dem

Unterteil aus der Normallage in die Crashlage zu verstellen.

Das erfindungsgemäße Fronthaubenscharnier ermöglicht es, dieses in besonders einfacher Weise, bspw. als Eingelenkscharnier auszubilden, bei dem der obere Scharnierflügel und der untere Scharnierflügel über lediglich einen Drehgelenkpunkt miteinander verbunden sind. Da das Oberteil im Crashfall gegenüber dem Unterteil verstellbar ist, erfolgt keine Verschiebung des Gelenkpunktes zwischen dem oberen Scharnierflügel und dem unteren Scharnierflügel bei der Verstellung der Fronthaube in die Crashlage. Dies führt dazu, dass im Crashfall eine Kante der Fronthaube - in Abhängigkeit von der Anlenkung über den Lenker - über eine Bogenbewegung - in Fahrzeugrichtung betrachtet - hoch und nach hinten bewegt werden kann. Das erfindungsgemäße Fronthaubenscharnier lässt sich somit auch unmittelbar im Bereich einer A-Säule verbauen, da der Gelenkpunkt des Scharniers zwischen dem oberen und dem unteren Scharnierflügel keine, bezogen auf die Gebrauchslage, Aufwärtsbewegung durchführt. Somit besteht die Möglichkeit, unter Umständen vorhandene Überbauten an einer A-Säule durch eine entsprechende Anlenkung des Oberteils an dem Unterteil über eine Bogenbewegung zu Umfahren, so dass ein ausreichend großer Verformungsraum zum Abbau der beim Aufprall einer Person auf die Fronthaube auftretenden Energie bereitgestellt wird.

Die Verbindung des Oberteils mit dem Unterteil ist dergestalt, dass im Normalbetrieb diese relativ aneinander festgelegt sind. Eine Trennung der Verbindung erfolgt, ausgelöst durch entsprechende Crashsensoren, durch die Trennvorrichtung, die derart auf das Fronthaubenscharnier wirkt, dass die Verbindung zwischen dem Oberteil und dem Unterteil zuverlässig aufgelöst wird. Die Verwendung einer Trennvorrichtung gewährleistet somit in besonders zuverlässiger Weise, dass unabhängig von auftretenden Belastungen der Fronthaube, allein in Folge eines sensorisch erfassten Crashfalls das Fronthaubenscharnier in die Crashlage bewegt wird.

Das erfindungsgemäße Fronthaubenscharnier lässt sich besonders einfach und kostengünstig herstellen. Aufgrund der vorzugsweise eingelenkigen Verbindung zwischen dem oberen und dem unteren Scharnierflügel besteht dabei zudem die Möglichkeit, diese auch im Bereich einer A-Säule zu verbauen, wo Überbauten zur Verstellung der Fronthaube in die Crashlage umfahren werden müssen.

Gemäß einer Weiterbildung der Erfindung ist im Falle der vorteilhafterweise vorgesehenen Verwendung eines Scherstifts zur Festlegung des Oberteils an dem Unterteil die Trennvorrichtung derart ausgebildet, dass diese zur Verstellung des Oberteils aus der Normallage in die Crashlage ein Abscheren des Scherstifts bewirkt.

Die Trennvorrichtung, welche grundsätzlich beliebig ausgebildet sein kann, ist gemäß dieser Weiterbildung der Erfindung derart an dem Fronthaubenscharnier angeordnet sowie ausgebildet, dass durch eine Aktivierung der Trennvorrichtung ein Abscheren des Scherstifts erreicht wird, wodurch das Oberteil gegenüber dem Unterteil freigegeben wird. Die Trennvorrichtung kann dabei sowohl direkt als auch indirekt auf den Scherstift abscherend wirken.

Nach einer besonders vorteilhaften Ausgestaltung der Erfindung ist die Trennvorrichtung durch einen pyrotechnischen Aktuator mit einem im Crashfall herausschnellenden Kolben gebildet, der derart angeordnet ist, dass der Kolben im Crashfall eine auf den Scherstift abscherende Kraft auswirkt. Die Verwendung von pyrotechnischen Aktuatoren zeichnet sich durch ihre besonders kurze Reaktionszeit sowie eine hohe Zuverlässigkeit aus. Darüber hinaus besteht die Möglichkeit, aus einer Vielzahl bereits bekannter Aktuatoren, wie sie bspw. im Rahmen von Überrollschutzsystemen eingesetzt werden, auszuwählen, so dass auf eine spezifische und damit kostenintensive Ausgestaltung eines Aktuators verzichtet werden kann. Die Funktionsweise des Aktuators stellt sich dabei derart dar, dass, angesteuert durch einen Crashsensor, im Auslösefall der Kolben aus dem Aktuator herausschnellt und dabei seine Bewegungsenergie auf den Scherstift überträgt, welcher infolge dessen abschert und das Oberteil gegenüber dem Unterteil freigibt.

Gemäß der Erfindung ist ein Scherhebel derart gelenkig an dem Fronthaubenscharnier angeordnet, dass dieser, im Crashfall durch den Kolben eines Aktuators angetrieben, ein Abscheren des Scherstifts bewirkt. Demgemäß treibt der Kolben eines Aktuators einen Scherhebel an, welcher seinerseits infolge dessen den Scherstift abschert. Dies gewährleistet in besonders zuverlässiger Weise, dass im Crashfall ein Abscheren des Scherstifts erfolgt. Darüber hinaus ermöglicht der Scherhebel zudem eine Übersetzung der Bewegungsenergie des Kolbens eines Aktuators. Auch besteht die Möglichkeit, den Scherhebel derart auszugestalten, dass er in einer genau vorbestimmten Weise mit dem Scherstift in abscherender Weise zusammenwirkt. Insbesondere ermöglicht der Scherhebel die Festlegung des Kontaktbereichs mit dem Scherstift, wodurch insgesamt die Funktionssicherheit erhöht wird.

Die grundsätzliche Anordnung des Scherstifts an dem Fronthaubenscharnier, durch die das Oberteil an dem Unterteil in der Normallage festgelegt wird, ist frei wählbar. Im Falle einer besonders vorteilhafterweise vorgesehenen Anordnung wonach sich der Scherstift durch mindestens einen Lenker erstreckt, besteht die Möglichkeit, den Aktuator derart anzuordnen, dass der Kolben im Crashfall unmittelbar auf den Lenker wirkt und damit ein Abscheren des Scherstifts bewirkt. Somit kann für diesen Fall auf weitere Anbauteile verzichtet werden. Der Scherstift erstreckt sich dabei sowohl durch den Lenker als auch durch ein angrenzendes Bauteil, wodurch das Oberteil an dem Unterteil festgelegt ist.

Der grundsätzliche Verwendungszweck der Trennvorrichtung besteht darin, durch diese im Crashfall ein Abscheren des Scherstifts zu bewirken, so dass ein Verschwenken des Oberteils aus einer Normallage in eine Crashlage erfolgen kann. Gemäß einer vorteilhaften Weiterbildung der Erfindung ist jedoch ferner vorgesehen, dass die Trennvorrichtung derart ausgebildet ist, dass sie neben einem Abscheren des Scherstifts ferner ein Verschwenken des Oberteils aus der Normallage in die Crashlage bewirkt. Gemäß dieser Ausgestaltung der Erfindung kann auf gegebenenfalls erforderliche separate Antriebsvorrichtungen zum Aufstellen der Fronthaube, nämlich zum Verstellen des Oberteils gegenüber dem Unterteil verzichtet werden. Die Trennvorrichtung, besonders vorteilhafterweise der Kolben, wirkt dabei nach dem Abscheren des Scherstifts ergänzend mit dem Fronthaubenscharnier zusammen und führt zu einer Verstellung des Oberteils gegenüber dem Unterteil bis in die Crashlage.

Gemäß einer weiteren Ausgestaltung der Erfindung ist das Oberteil gegenüber dem Unterteil in Richtung auf die Crashlage vorgespannt, insbesondere federvorgespannt. Diese Ausgestaltung der Erfindung gewährleistet nach einer Auflösung der Verbindung zwischen dem Oberteil und dem Unterteil in besonders zuverlässiger Weise eine Verstellung der Fronthaube in die Crashlage. Diese lässt sich darüber hinaus besonders einfach und kostengünstig, insbesondere im Falle der Verwendung einer Federvorspannung, realisieren.

Für die Funktion des erfindungsgemäßen Fronthaubenscharniers genügt eine einfache Verstellbarkeit des Oberteils gegenüber dem Unterteil, durch die eine Aufstellung der Fronthaube gegenüber der Fahrzeugkarosserie aus der Normallage in die Crashlage bewirkt wird, wozu bereits eine Verbindung des Oberteils mit dem Unterteil über einen Lenker ausreichend ist. Nach einer besonders vorteilhaften Ausgestaltung der Erfindung ist das Oberteil mit dem Unterteil jedoch über zwei Lenker verbunden und bildet damit im Crashfall ein Viergelenkscharnier. Hierdurch wird in besonders zuverlässiger Weise der Ablauf der Bewegung der Fronthaube bei der Verstellung aus der Normallage in die Crashlage festgelegt. Darüber hinaus zeichnet sich die Verbindung gemäß dieser Ausgestaltung der Erfindung als besonders zuverlässig aus.

Ein Ausführungsbeispiel der Erfindung wird nachstehend mit Bezug auf die Zeichnungen näher erläutert. In den Zeichnungen zeigen:
- Fig. 1: eine Seitenansicht einer Ausführungsform eines Fronthaubenscharniers in Normal- lage an einem Karosseriebauteil sowie daran angeordneter Fronthaube in einer Schließposition;
- Fig. 2: eine Seitenansicht des Fronthaubenscharniers von Fig. 1 in Normallage in einer Öffnungsposition;
- Fig. 3: eine Seitenansicht des Fronthaubenscharniers von Fig. 1 in einer Crashlage;
- Fig. 4a: einen Ausschnitt des Fronthaubenscharniers von Fig. 1 mit einer in einer Normalla- ge angeordneten Trennvorrichtung und
- Fig. 4b: einen Ausschnitt des Fronthaubenscharniers von Fig. 4b mit aktivierter Trennvor- richtung.

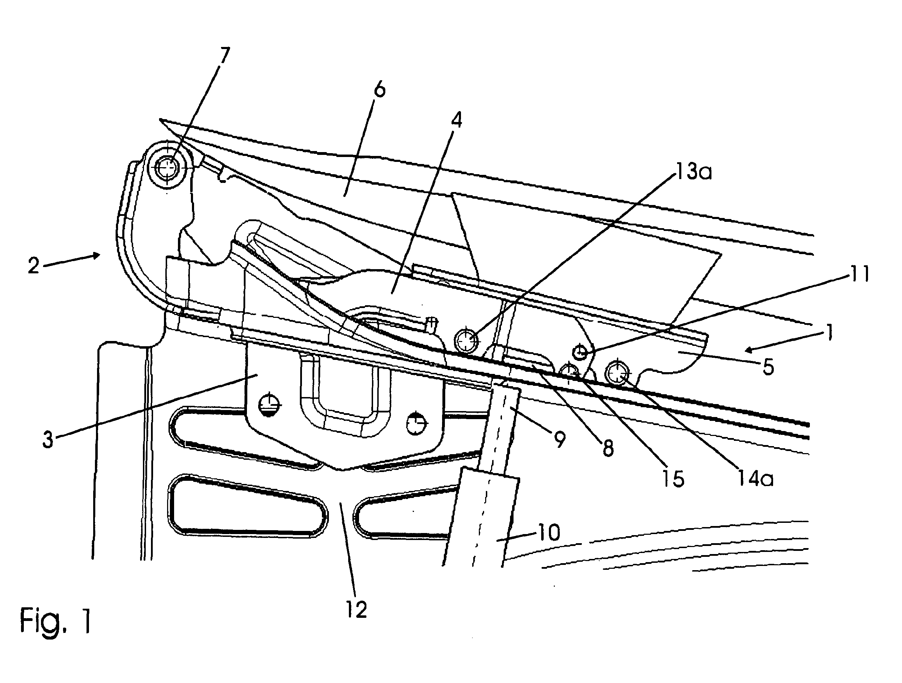

Eine Ausführungsform eines Fronthaubenscharniers 1 in seiner Einbaulage an einem Fahrzeug ist in Fig. 1 dargestellt, wobei von dem hier nicht dargestellten Fahrzeug lediglich ein Karosseriebauteil 12 sowie eine Fronthaube 6 dargestellt ist.

Das Fronthaubenscharnier 1 weist einen unteren Scharnierflügel 3 auf, über den das Fronthaubenscharnier 1 mit dem Karosseriebauteil 12 verbunden ist. Über ein Drehgelenk 7 ist der untere Scharnierflügel 3 drehgelenkig mit dem oberen Scharnierflügel 2 verbunden. Der obere Scharnierflügel 2 besteht dabei aus einem Unterteil 4, welches direkt mit dem Drehgelenk 7 verbunden ist sowie einem Oberteil 5, welches an der Fronthaube 6 befestigt ist.

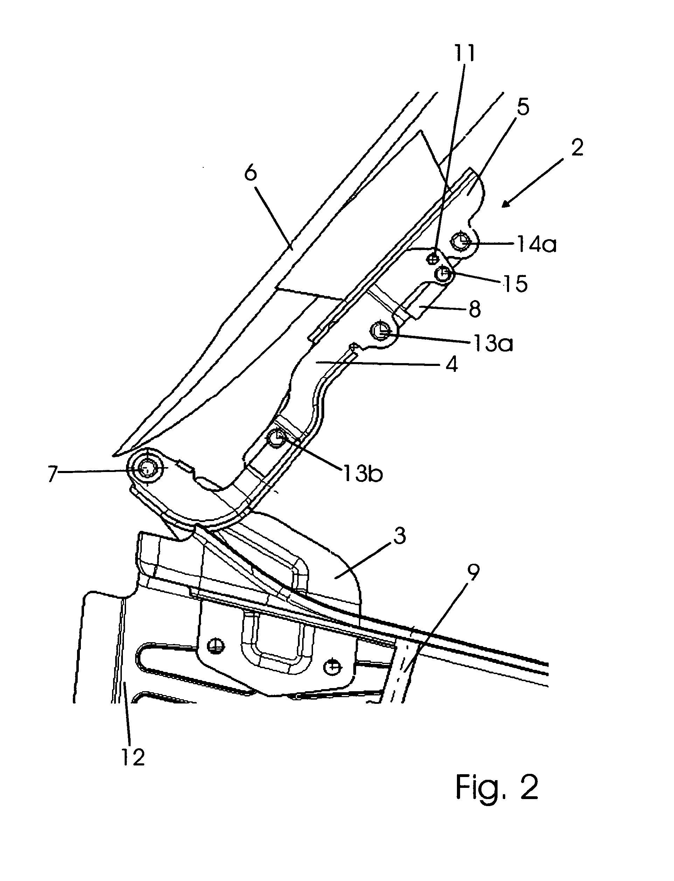

Im Normalbetrieb sind das Oberteil 5 und das Unterteil 4 über einen Scherstift 11, welcher sich durch das Ober- und Unterteil 4, 5 erstreckt aneinander festgelegt. Eine Verstellung der Motorhaube aus der in Fig. 1 dargestellten Schließstellung in die in Fig. 2 dargestellte Öffnungsstellung erfolgt allein unter Verschwenkung des oberen Scharnierflügels 2 gegenüber dem unteren Scharnierflügel 3, wobei zwischen dem Oberteil 5 und dem Unterteil 4 keinerlei Relativbewegung stattfindet.

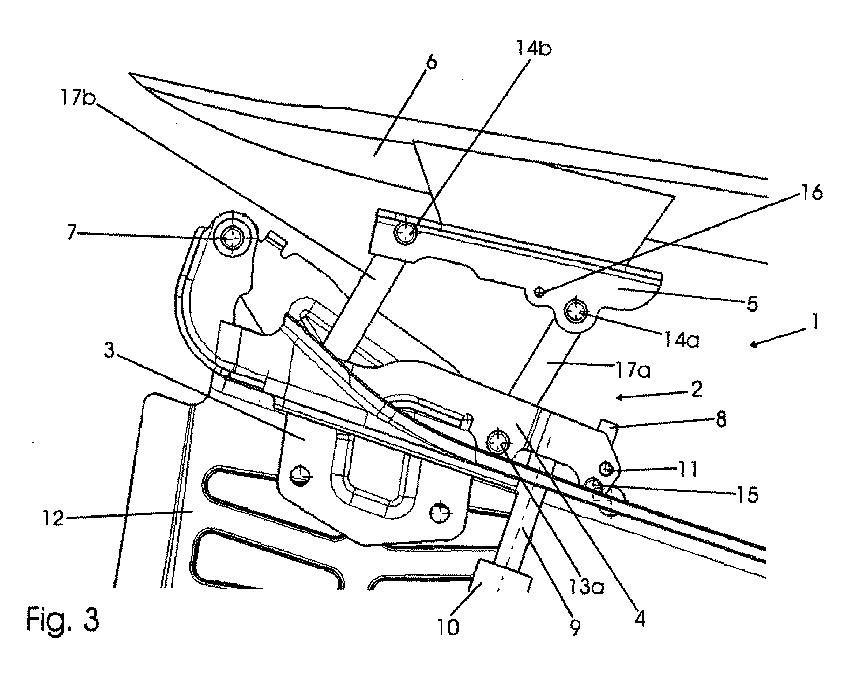

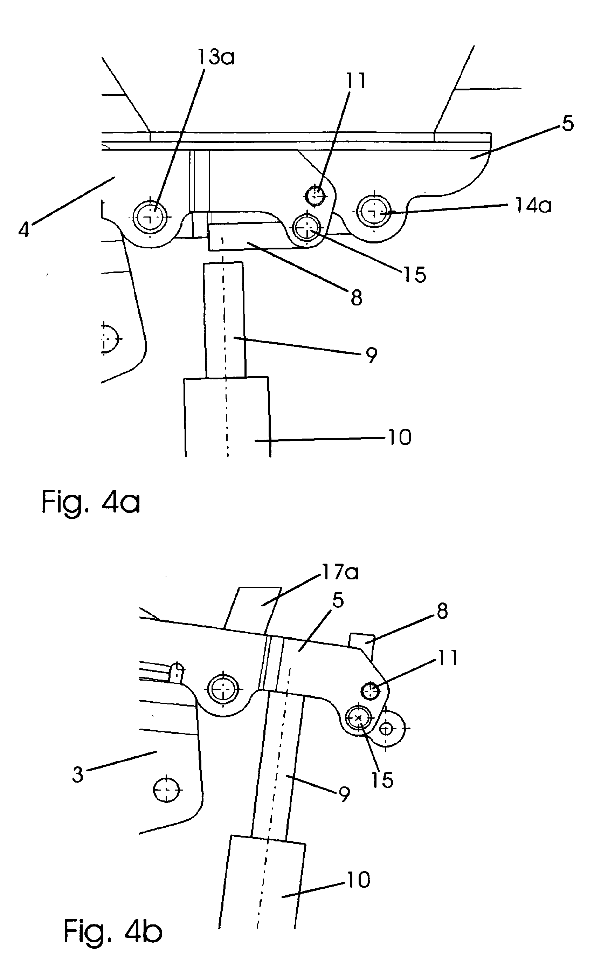

Wie aus Fig. 3 ersichtlich, ist das Oberteil 5 mit dem Unterteil 4 über zwei Lenker 17a, 17b nach Art eines Viergelenkscharniers gelenkig verbunden, wobei die Lenker 17a, 17b drehgelenkig über Gelenkbolzen 14a, 14b am Oberteil 5 und über Gelenkbolzen 13a, 13b am Unterteil 4 angeordnet sind. Eine Verstellung der Fronthaube 6 in die in Fig. 3 dargestellte Crashlage setzt eine Trennung der über den Scherstift 11 hergestellten Verbindung zwischen dem Oberteil 5 und dem Unterteil 4 voraus. Hierzu dient ein Aktuator 10, welcher im Falle einer Auslösung, bspw. erzeugt durch einen Crashsensor, einen Kolben 9 in Richtung auf den oberen Scharnierflügel 4 verstellt. Der Kolben 9 gelangt dabei in Eingriff mit einem Scherhebel 8, welcher, verschwenkt um einen Lagerbolzen 15 mit dem Scherstift 11 in Eingriff gelangt und diesen abschert (vgl. Fig. 4a und 4b).

Infolge der Abscherung des Scherstifts 11, der sich durch das Unterteil 4 sowie im Oberteil 5 durch die Scherstiftaufnahme 16 erstreckt, ist eine Verstellung der Motorhaube 6 aus der in Fig. 1 dargestellten Normallage in die in Fig. 3 dargestellte Crashlage ohne Verschwenkung des Unterteils 4 gegenüber dem unteren Scharnierflügel 3 möglich. In der Crashlage wird ein zusätzlicher Deformationsbereich bereitgestellt, der zum Abbau der beim Aufprall einer Person auf die Fronthaube 6 auftretenden Energie geeignet ist.

## Patentansprüche

1. Fronthaubenscharnier zur gelenkigen Anordnung einer Fronthaube an einem Fahrzeug, mit
- einem mit einem Karosseriebauteil (12) verbindbaren unteren Scharnierflügel (3) und
- einem mit der Fronthaube (6) verbindbaren oberen Scharnierflügel (2), wobei
- der obere Scharnierflügel (2) und der untere Scharnierflügel (3) zur Verstellung der Fronthaube (6) zwischen einer Schließposition und einer Öffnungsposition gelenkig miteinander verbunden sind, wobei
- der obere Scharnierflügel (2) ein drehgelenkig mit dem unteren Scharnierflügel (3) verbundenes Unterteil (4) und ein an der Fronthaube (6) anordbares Oberteil (5) aufweist, wobei das Unterteil (4) und das Oberteil (5) gelenkig über mindestens einen Lenker (17a, 17b) verbunden sind, und wobei eine Relativbewegung des Oberteils (5) gegenüber dem Unterteil (4) aus einer Normallage in eine Crashlage erst nach Trennung einer das Oberteil (5) an dem Unterteil (4) in der Normallage festlegenden Verbindung durch eine Trennvorrichtung (10) erfolgt, wobei das Oberteil (5) und das Unterteil (4) in der Normallage über einen Scherstift (11) aneinander festgelegt sind,
**dadurch gekennzeichnet, dass**
ein Scherhebel (8) derart gelenkig angeordnet ist, dass dieser im Crashfall durch den Kolben (9) eines Aktuators (10) angetrieben ein Abscheren des Scherstifts (11) bewirkt.

2. Fronthaubenscharnier nach Anspruch 1, **dadurch gekennzeichnet, dass** die Trennvorrichtung (10) derart ausgebildet ist, dass diese zur Verstellung des Oberteils (5) aus der Normallage in die Crashlage ein Abscheren des Scherstifts (11) bewirkt.

3. Fronthaubenscharnier nach Anspruch 1 oder 2, **dadurch gekennzeichnet, dass** die Trennvorrichtung durch einen pyrotechnischen Aktuator (10) mit einem im Crashfall herausschnellenden Kolben (9) gebildet ist, der derart angeordnet ist, dass der Kolben (9) im Crashfall eine auf den Scherstift (11) abscherende Kraft ausübt.

4. Fronthaubenscharnier nach einem der vorhergehenden Ansprüche, **dadurch gekennzeichnet, dass** der Scherstift (11) sich durch mindestens einen Lenker (17a, 17b) erstreckt.

5. Fronthaubenscharnier nach einem der vorhergehenden Ansprüche, **dadurch gekennzeichnet, dass** die Trennvorrichtung (10) derart ausgebildet ist, dass diese neben einem Abscheren des Scherstifts (11) ein Verschwenken des Oberteils (5) aus der Normallage in die Crashlage bewirkt.

6. Fronthaubenscharnier nach einem der vorhergehenden Ansprüche, **dadurch gekennzeichnet, dass** das Oberteil (5) gegenüber dem Unterteil (4) in Richtung auf die Crashlage vorgespannt, insbesondere federvorgespannt ist.

7. Fronthaubenscharnier nach einem der vorhergehenden Ansprüche, **dadurch gekennzeichnet, dass** das Oberteil (5) über zwei Lenker (17a, 17b) mit dem Unterteil (4) verbunden ist.

## Claims

1. A bonnet hinge for an articulated connection of a bonnet to a vehicle, with
- a lower hinge wing (3) connectable with a car body component (12) and
- an upper hinge wing (2) connectable with the bonnet (6), wherein
- the upper hinge wing (2) and the lower hinge wing (3) are connected in an articulated manner for adjustment of the bonnet (6) between a closed position and an open position, wherein
- the upper hinge wing (2) has a bottom part (4) connected in a pivoting manner with the lower hinge wing (3) and an upper part (5) to be arranged on the bonnet (6), wherein the bottom part (4) and the top part (5) are connected in an articulated manner via at least one guider (17a, 17b), and wherein a relative movement of the upper part (5) with respect to the bottom part (4) out of a normal position into a crash position first takes place after separation of a connection fixing the upper part (5) on the bottom part (4) in the normal position by a separating device (10), wherein the upper part (5) and the lower part (4) are fixed on each other in the normal position via a shear pin (11),
**characterized in that**
a shear lever (8) is arranged in an articulated manner such that it, in the case of a crash, driven by the piston (9) of an actuator (10), causes a shearing off of the shear pin (11).

2. The bonnet hinge according to claim 1 **characterized in that** the separating device (10) is designed such that it, for adjustment of the upper part (5) from the normal position into the crash position, causes a shearing off of the shear pin (11).

3. The bonnet hinge according to claim 1 or 2, **characterized in that** the separating device is formed by a pyrotechnic actuator (10) with a piston (9) springing out in the case of a crash, which is arranged such that the piston (9) in the case of a crash exerts a shearing force on the shear pin (11).

4. The bonnet hinge according to one of the previous claims, **characterized in that** the shear pin (11) extends through at least one guider (17a, 17b).

5. The bonnet hinge according to one of the previous claims, **characterized in that** the separating device (10) is designed such that it in addition to the shearing off of the shear pin (11) causes a pivoting of the upper part (5) out of the normal position into the crash position.

6. The bonnet hinge according to one of the previous claims, **characterized in that** the upper part (5) with respect to the bottom part (4) is pretensioned, in particular spring-pretensioned, in the direction of the crash position.

7. The bonnet hinge according to one of the previous claims, **characterized in that** the upper part (5) is connected with the bottom part (4) via two guiders (17a, 17b).

## Revendications

1. Charnière de capot frontal destinée à l'agencement articulé d'un capot frontal sur un véhicule, comprenant
- une aile de charnière inférieure (3) pouvant être reliée à un composant de carrosserie (12) et
- une aile de charnière supérieure (2) pouvant être reliée au capot frontal (6), dans laquelle
- l'aile de charnière supérieure (2) et l'aile de charnière inférieure (3) sont reliées ensemble à articulation pour le déplacement du capot frontal (6) entre une position de fermeture et une position d'ouverture, dans laquelle
- l'aile de charnière supérieure (2) présente une partie inférieure (4) reliée à articulation rotative à l'aile de charnière inférieure (3) et une partie supérieure (5) pouvant être disposée sur le capot frontal (6), dans laquelle la partie inférieure (4) et la partie supérieure (5) sont reliées à articulation par le biais d'au moins un bras oscillant (17a, 17b), et dans laquelle un mouvement relatif de la partie supérieure (5) par rapport à la partie inférieure (4) est effectué par un dispositif de séparation (10) d'une position normale dans une position de collision uniquement après séparation d'une connexion fixant la partie supérieure (5) à la partie inférieure (4) dans la position normale, dans laquelle la partie supérieure (5) et la partie inférieure (4) sont fixées l'une à l'autre dans la position normale par le biais d'un goujon de cisaillement (11),
**caractérisée en ce que**
un levier de cisaillement (8) est disposé à articulation de telle sorte que celui-ci entraîne un cisaillement du goujon de cisaillement (11) en cas de collision entraîné par le piston (8) d'un actionneur (10).

2. Charnière de capot frontal selon la revendication 1, **caractérisée en ce que** le dispositif de séparation (10) est réalisé de telle sorte que celui-ci entraîne un cisaillement du goujon de cisaillement (11) pour le déplacement de la partie supérieure (5) de la position normale dans la position de collision.

3. Charnière de capot frontal selon la revendication 1 ou 2, **caractérisée en ce que** le dispositif de séparation est formé par un actionneur pyrotechnique (10) avec un piston (9) à extraction rapide en cas de collision qui est disposé de telle sorte que le piston (9) entraîne une force de cisaillement sur le goujon de cisaillement (11) en cas de collision.

4. Charnière de capot frontal selon l'une quelconque des revendications précédentes, **caractérisée en ce que** le goujon de cisaillement (11) s'étend à travers au moins un bras oscillant (17a, 17b).

5. Charnière de capot frontal selon l'une quelconque des revendications précédentes, **caractérisée en ce que** le dispositif de séparation (10) est réalisé de telle sorte que celui-ci entraîne outre un cisaillement du goujon de cisaillement (11) un pivotement de la partie supérieure (5) de la position normale dans la position de collision.

6. Charnière de capot frontal selon l'une quelconque des revendications précédentes, **caractérisée en ce que** la partie supérieure (5) est précontrainte par rapport à la partie inférieure (4) en direction de la position de collision, notamment précontrainte par un ressort.

7. Charnière de capot frontal selon l'une quelconque des revendications précédentes, **caractérisée en ce que** la partie supérieure (5) est reliée à la partie inférieure (4) par le biais de deux bras oscillants (17a, 17b).
